# EUROPÄISCHE PATENTSCHRIFT

(11) **EP 1 405 454 B1**
(45) Veröffentlichungstag und Bekanntmachung des Hinweises auf die Patenterteilung: **28.03.2007**
(21) Anmeldenummer: 02748615.8
(22) Anmeldetag: 04.07.2002
(51) Int. Cl.: H04L 1/08, H04L 1/04

(54) **VERFAHREN UND VORRICHTUNG ZUR DRAHTLOSEN ÜBERTRAGUNG VON SPRACHDATEN**
METHOD AND DEVICE FOR THE WIRELESS TRANSMISSION OF VOICE DATA
PROCEDE ET DISPOSITIF DE TRANSMISSION SANS FIL DE DONNEES VOCALES

(30) Priorität: 10.07.2001 DE 10133518
(43) Veröffentlichungstag der Anmeldung: 07.04.2004
(73) Patentinhaber: SIEMENS AKTIENGESELLSCHAFT, 80333 München (DE)
(72) Erfinder: KRUK, Anton, 46499 Hamminkeln (DE); MÜLLER, Andreas, 46459 Rees (DE); SCHLIWA, Peter, 46499 Hamminkeln (DE); PAULI, Burkhard, 46284 Dorsten (DE)
(86) Internationale Anmeldenummer: PCT/DE2002/002454
(87) Internationale Veröffentlichungsnummer: WO 2003/007531

(56) Entgegenhaltungen:
- WO-A-00/70811
- DE-C- 2 706 616
- HAGMANN W ET AL: "DIGITALE DATENUEBERTRAGUNG UEBER DAS ELEKTRISCHE VERTEILNETZ MITTELS FH/PSK. DIGITAL DATA TRANSMISSION OVER THE POWER MAINS USING FH/PSK" FREQUENZ, SCHIELE UND SCHON GMBH. BERLIN, DE, Bd. 40, Nr. 9/10, September 1986 (1986-09), Seiten 260-265, XP000763717 ISSN: 0016-1136

## Beschreibung

Die Erfindung betrifft ein Verfahren und Vorrichtung zur drahtlosen Übertragung von Sprachdaten zwischen zwei Endgeräten, wobei die Sprachdaten in Datenpaketen in vordefinierten Datenrahmen mehrfach redundant und in zeitlichen Abständen auf wechselnden Frequenzen übertragen werden.

Ein solches Verfahren ist allgemein unter dem Namen "Bluetooth" als Standard für die Funkkoznmunikation mit geringen Reichweiten zwischen Endgeräten bekannt. Als Endgeräte kommen hier beispielsweise Handys, Notebooks, Organizer, PDAs oder auch Personal Computer mit Peripheriegeräten in Betracht. Bei dieser Datenübertragung wird entsprechend dem standardisierten Bluetooth-Protokoll eine mehrfache, wenn möglich dreifache, Redundanz bei der Datenübertragung durchgeführt. Hierbei wird jedes einzelne Bit zur Erzeugung der Redundanz unmittelbar hintereinander dreifach übertragen, so daß der Empfänger bei eventuellen Störungen jeweils das häufiger übertragene Bit im Tripel der gleichen Bits als das Wahrscheinlichere annimmt .

Ein Problem bei dieser Übertragungsweise kann jedoch darin liegen, dass bei den im Bluetooth-Standard vorhandenen Sprünge zwischen den Frequenzen auch manchmal relativ verrauschte Frequenzen zur Datenübertragung genutzt werden, wobei dann alle Daten die in diesem Frequenzbereich übertragen wurden, auch wenn sie mehrfach redundant waren, schlecht wiedererkannt werden können.

Aus der WO 00/70811 ist ein Funktelekommunikationssystem bekannt, welches eine Kombination aus Frequenzsprung- sowie Zeitlagengetrenntverfahren verwendet, bei dem ein Datenpaket genau zweimal übertragen wird, wobei dies auf separaten Frequenzen erfolgt und wobei auf der jeweiligen Frequenz ein anderer Zeitschlitz genutzt wird.

Aus Hagmann, Walter und Braun, Walter: "Digitale Datenübertragung über das elektrische Verteilnetz mittels FH/PSK. (Digital data transmission over the power mains using FH/PDK)" Frequenz, Schiele und Schon GmbH. Berlin, DE, Bd. 40, Nr. 9/10, September 1986, Seiten 260-265, ISSN: 0016-1136, ist ein Funktelekommunikationssystem bekannt, welches eine Kombination aus Frequenzsprung- sowie Phasenumtastverfahren verwendet, bei dem ein Datenbit genau zweimal übertragen wird, wobei dies auf separaten Frequenzen erfolgt.

Aus der DE 27 06 616 C1 ist ein Funksystem zur störsicheren wechselseitigen digitalen Informationsübertragung zwischen wenigstens zwei Stationen bekannt, bei dem die Funkverbindung zumindest während der Informationsübermittlung mit sich sprungweise zu vorgegebenen Zeiten in einem größeren Frequenzbereich ändernder Radiofrequenz betrieben wird.

Es ist daher Aufgabe der Erfindung, ein Verfahren gemäß dem Oberbegriff des Anspruches 1 zu finden, welches eine höhere Sicherheit bei gleicher Redundanz der gesendeten Daten erzeugt.

Die Aufgabe dieser Erfindung wird durch die Merkmale des Anspruches 1 gelöst.

Die Erfinder haben erkannt, dass es günstiger ist, die redundant übertragenen Bits nicht nur auf einer einzigen Frequenz und in einem sehr kurzen Zeitraum gleichzeitig zu übertragen, sondern diese redundanten Bits auf mehrere Frequenzen und über einen längeren Zeitraum hinweg zu verteilen, so dass die Störwahrscheinlichkeit, die sich auf alle redundanten Bits einer bestimmten Information beziehen, stark reduziert wird.

Bei dem Verfahren zur drahtlosen Übertragung von Sprachdaten zwischen mindestens zwei Endgeräten, bei dem die Sprachdaten in Datenpaketen in vordefinierten Datenrahmen mehrfach redundant und in zeitlichen Abständen auf wechselnden Frequenzen übertragen werden, findet zumindest bezüglich eines redundanten Datensatzpaares die Übertragung auf unterschiedlichen Frequenzen statt.

Eine weitere vorteilhafte Verbesserung des erfindungsgemäßen Verfahren kann sich dadurch ergeben, dass die Qualität der Datenübertragung überprüft wird und die Anzahl n der redundanten Datenpakete eine Funktion der Qualität der Datenübertragung ist.

Hierbei kann die Qualität der Datenübertragung vor dem Beginn des Versendens der Datenpakete oder auch während der laufenden Datenübertragung fortwährend bestimmt werden. Dabei kann dann die Anzahl n der redundanten Datenpakete adaptiv angepasst werden, so dass mit höherer Redundanz gesendet wird, sobald eine schlechte Datenqualität gemessen wird, und umgekehrt. Hierbei kann in extremen Fällen bei bester Datenqualität sogar auf die Versendung redundanter Datenpakete verzichtet werden, während bei schlechter Datenqualität eine sehr hohe Redundanz eingestellt wird, was sich allerdings dann ungünstig auf die Datentransferrate auswirkt.

Vorzugsweise wird dieses Verfahren im sogenannten Bluetooth-Standard verwendet.

Da durch dieses Verfahren einmal die Redundanz auf mindestens zwei unterschiedliche, vorzugsweise drei unterschiedliche, Frequenzen aufgeteilt wird und diese Aufteilung außerdem auch über einen größeren Zeitraum hinweg stattfindet, reduziert sich hierdurch die Störungswahrscheinlichkeit durch äußere Einflüsse gegenüber dem bekannten Standard, bei dem die Redundanz durch mehrere direkt hintereinander gesendete gleiche Bits erzeugt wird.

Vorteilhaft können hierbei n, vorzugsweise drei, redundante Datenpakete, aufgeteilt in n nacheinander ausgewählte Frequenzen, übertragen werden, wobei in einer Frequenz jeweils n Generationen von Datenpaketen übertragen werden, die vorzugsweise entsprechend ihres Alters angeordnet sind.

Entsprechend dem Grundgedanken der Erfindung wird auch eine Schaltungsanordnung zur Durchführung des oben dargestellten Verfahrens und auch eine Sende/Empfangsvorrichtung, vorzugsweise eines Bluetooth-Gerätes, mit einem Prozessor und Programmcodemitteln zur Durchführung des oben genannten Verfahrens vorgeschlagen.

Weitere vorteilhafte Ausgestaltungen sind aus den Unteransprüchen und der nachfolgenden Beschreibung eines bevorzugten Ausführungsbeispiels ersichtlich.

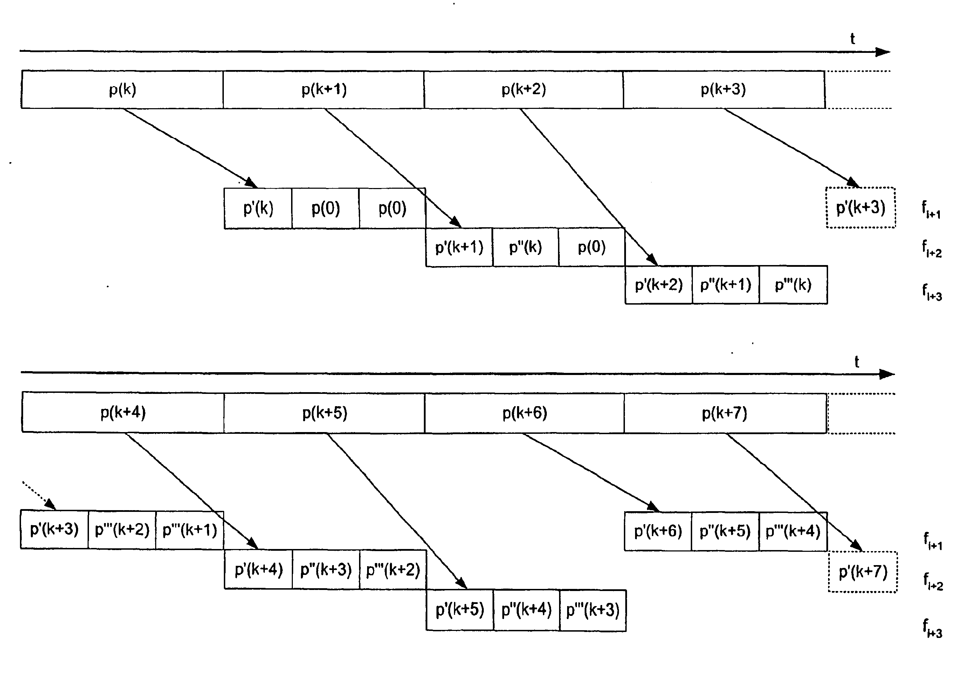

Die Figur 1 zeigt die schematische Darstellung des Zeitverlaufs eines Sprachdatenstromes entlang der Zeitachse t. Aus Platzgründen wurde diese hintereinander folgende Zeitachse t in zwei Zeilen dargestellt. Unterhalb der Zeitachse t befinden sich die digitalisierten Daten eines Sprachstroms, die in Pakete p in hintereinander folgende Pakete p(k+x) aufgeteilt sind.

Erfindungsgeinäß wird jedes Paket p(k+x) derart auf ein Paket p' (k+x) komprimiert, dass höchstens ein Drittel der übertragenen Zeit bei der eigentlichen Datenübertragung verbraucht wird. Auf diese Weise kann nun mindestens die dreifache Datenmenge während der Zeit des Datenstromes versendet werden, so dass jedes einzelne Datenpaket - wie dargestellt - einmal in verkürzter Weise in einer ersten Frequenz fᵢ₊₁ gesendet wird. Da zu Beginn der Sendung die zwei nachfolgenden Datenpakete p(0) noch keine Information enthalten, können diese beispielsweise mit Leer-Daten oder sogenannten Mute-Patern gefüllt werden. Beim Übergang auf die nächste Frequenz verschieben sich die Datenpakete um einen Datensatz nach rechts, so dass das nächste Datenpaket p(k+1) in das Tripel der Datenpakete der nächsten Frequenz f₂ eingereiht werden kann. Auf diese Weise werden letztendlich auf jeder Frequenz drei Generationen von komprimierten Datenpaketen p', p'' und p'" versendet, die drei nacheinander folgenden Ursprungspaketen zuzuordnen sind. Die Redundanz der Daten teilt sich somit einerseits über drei Frequenzen fᵢ₊₁, fᵢ₊₂ und fᵢ₊₃ auf und wird andererseits auch zeitlich über eine größere Spanne verteilt. Hierdurch ergibt sich eine wesentlich geringere Störanfälligkeit, wobei dieses Verfahren vorzugsweise im Bluetooth-Standard verwendet werden kann.

Am Ende einer Sprachübermittlung kann dieses Verfahren einfach abbrechen, wobei das letzte Datenpaket dann lediglich einmal und das vorletzte lediglich zweimal ausgesendet wird.

Ergänzend ist zu dem dargestellten Beispiel anzumerken, dass es sich bei den genannten Frequenzen fᵢ₊₁ bis fᵢ₊₃ natürlich nicht um absolute Frequenzen handelt und natürlich auch mehr als die angegebenen 3 Frequenzen aus einem zur Verfügung stehenden Pool an Frequenzen genutzt werden können. Die Reihenfolge der genutzten Frequenzen kann dabei beliebig gewählt werden.

Es versteht sich, dass die vorstehend genannten Merkmale der Erfindung nicht nur in der jeweils angegebenen Kombination, sondern auch in anderen Kombinationen oder in Alleinstellung verwendbar sind.

## Patentansprüche

1. Verfahren zur drahtlosen Übertragung von Sprachdaten zwischen mindestens zwei Endgeräten, wobei die in hintereinander folgenden Paketen p(k+x) organisierten Sprachdaten jeweils in Datenpaketen p', p'', p"' in vordefinierten Datenrahmen mehrfach redundant und in zeitlichen Abständen auf wechselnden Frequenzen (fᵢ₊₁, fᵢ₊₂, fᵢ₊₃)
übertragen werden, zumindest bezüglich eines redundanten Datensatzpaares p', p'' die Übertragung auf unterschiedlichen Frequenzen (fᵢ₊₁, fᵢ₊₂) stattfindet,
**dadurch gekennzeichnet, dass**
in einer Frequenz (fᵢ₊₃) n unterschiedliche und jeweils unterschiedlich häufig übertragene redundante Datenpakete (p' (k+2), p" (k+1), p"' (k)) hintereinander folgender Pakete (p(k+2), p(k+1), p(k)) übertragen werden.

2. Verfahren gemäß dem Patentanspruch 1, **dadurch gekennzeichnet, dass** die Datenpakete n-fach-redundant übertragen werden, wobei gilt n ≥ 2, vorzugsweise n = 3.

3. Verfahren gemäß einem der voranstehenden Patentansprüche 1 bis 2, **dadurch gekennzeichnet, dass** n redundante Datenpakete aufgeteilt in n nacheinander ausgewählten Frequenzen übertragen werden.

4. Verfahren gemäß einem der voranstehenden Patentansprüche 1 bis 3, **dadurch gekennzeichnet, dass** in einer Fre- /3 quenz jeweils n unterschiedlich häufig übertragene redundante Datenpakete übertragen werden, wobei diese vorzugsweise entsprechend ihrer Häufigkeit der Übertragung angeordnet sind.

5. Verfahren gemäß einem der voranstehenden Patentansprüche 1 bis 4, **dadurch gekennzeichnet, dass** die Qualität der Datenübertragung überprüft wird und die Anzahl n der redundanten Datenpakete eine Funktion der Qualität der Datenübertragung ist.

6. Verfahren gemäß dem voranstehenden Patentanspruch 5, **dadurch gekennzeichnet, dass** die Qualität der Datenübertragung vor dem Beginn des Versendens der Datenpakete bestimmt wird.

7. Verfahren gemäß dem voranstehenden Patentansprüch 6, **dadurch gekennzeichnet, dass** die Qualität der Datenübertragung während der Datenübertragung laufend bestimmt wird und sich die Anzahl n der redundanten Datenpakete adaptiv ändert.

8. Schaltungsanordnung mit Mitteln besonders angepasst zur Durchführung des Verfahrens gemäß einem der Ansprüche 1 bis 5.

9. Sende/Empfangsvorrichtung, vorzugsweise eines Bluetooth-Gerätes, mit einem Prozessor und Programmcodemitteln zur Durchführung des Verfahrens gemäß einem der Ansprüche 1 bis 5.

## Claims

1. Method for the wireless transmission of voice data between at least two terminals, the voice data, organized in successive packets p(k+x), being transmitted in respective data packets p', p", p''' in predefined data frames with multiple redundancy and in time intervals at alternating frequencies (fᵢ₊₁, fᵢ₊₂, fᵢ₊₃), with the transmission taking place on different frequencies (fᵢ₊₁, fᵢ₊₂) at least with respect to a redundant pair of data records p', p", **characterized in that** n different redundant data packets (p' (k+2), p" (k+1), p'" (k)), which are each transmitted with different regularity, from successive packets (p(k+2), p(k+1), p(k)) are transmitted at one frequency (fᵢ₊₃).

2. Method according to Claim 1, **characterized in that** the data are transmitted with n-tuple redundancy, where n ≥ 2, preferably n = 3.

3. Method according to one of the preceding Claims 1 to 2, **characterized in that** n redundant data packets are transmitted divided into n successively selected frequencies.

4. Method according to one of the preceding Claims 1 to 3, **characterized in that** in each case n generations of data packets preferably arranged in accordance with their age are transmitted in one frequency.

5. Method according to one of the preceding Claims 1 to 4, **characterized in that** the quality of the data transmission is checked and the number n of redundant data packets is a function of the quality of the data transmission.

6. Method according to the preceding Claim 5, **characterized in that** the quality of the data transmission is determined before the beginning of the transmission of the data packets.

7. Method according to the preceding Claim 6, **characterized in that** the quality of the data transmission is continuously determined during the data transmission and the number n of redundant data packets changes adaptively.

8. Circuit arrangement with means especially adapted for carrying out the method according to one of claims 1 to 5.

9. Transceiver device, preferably of a Bluetooth device, with a processor and program code means for carrying out the method according to one of claims 1 to 5.

## Revendications

1. Procédé pour la transmission sans fil de données vocales entre au moins deux terminaux, les données vocales organisées dans des paquets p(k+x) successifs étant transmises à chaque fois en paquets de données p', p", p''' dans des cadres de données prédéfinis plusieurs fois de façon redondante et à des intervalles de temps sur les fréquences (fᵢ₊₁, fᵢ₊₂, fᵢ₊₃) variables, la transmission ayant lieu au moins par rapport à une paire redondante d'ensembles de données p', p'' sur différentes fréquences (fᵢ₊₁, fᵢ₊₂),
**caractérisé en ce que**,
sont transmis dans une fréquence (fᵢ₊₃), n paquets de données (p' (k+2), p'' (k+1), p''' (k)) différents, redondants et à chaque fois transmis avec une multiplicité différente, de paquets (p (k+2), p (k+1), p (k)) successifs.

2. Procédé selon la revendication 1, **caractérisé en ce que** les paquets de données sont transmis de façon n fois redondante, n étant > 2, de préférence n étant égal à 3.

3. Procédé selon l'une quelconque des revendications 1 à 2 précédentes, **caractérisé en ce que** n paquets de données redondants sont transmis de façon divisée en n fréquences sélectionnées de façon successive.

4. Procédé selon l'une quelconque des revendications 1 à 3 précédentes, **caractérisé en ce qu'**à chaque fois n paquets de données redondants, transmis avec une multiplicité différente, sont transmis dans une fréquence, ces paquets de données étant disposés de préférence en fonction de leur multiplicité de transmission.

5. Procédé selon l'une quelconque des revendications 1 à 4 précédentes, **caractérisé en ce que** la qualité de la transmission de données est vérifiée et le nombre n des paquets de données redondants est une fonction de la qualité de la transmission de données.

6. Procédé selon la revendication 5 précédente, **caractérisé en ce que** la qualité de la transmission de données est déterminée avant le début de l'envoi des paquets de données.

7. Procédé selon la revendication 6 précédente, **caractérisé en ce que** la qualité de la transmission de données est déterminée de façon continue pendant la transmission de données et le nombre n des paquets de données redondants varie de façon adaptative.

8. Agencement de circuit avec des moyens particulièrement adaptés pour la mise en oeuvre du procédé selon l'une quelconque des revendications 1 à 5.

9. Dispositif d'émission et de réception, de préférence d'un appareil bluetooth, avec un processeur et des moyens de code de programme pour la mise en oeuvre du procédé selon l'une quelconque des revendications 1 à 5.
